Europäisches Patentamt

(19) European Patent Office

Office européen des brevets

(11) Publication number: **0 454 359 A1**

(12) **EUROPEAN PATENT APPLICATION**

(21) Application number: **91303481.5**

(22) Date of filing: **18.04.91**

(51) Int. Cl.⁵: **C08F 287/00, C08F 2/48**

(30) Priority: **23.04.90 US 512920**

(43) Date of publication of application:
**30.10.91 Bulletin 91/44**

(84) Designated Contracting States:
**AT BE CH DE DK ES FR GB GR IT LI LU NL SE**

(71) Applicant: **KOCH INDUSTRIES, INC.**
**4111 E. 37th Street**
**Wichita Kansas 67220 (US)**

(72) Inventor: **Johnson, Philip W.**
**10310 Binter**
**Wichita, Kansas 67212 (US)**
Inventor: **Stevenson, William T.K.**
**2536 Dalton**
**Wichita, Kansas 67210 (US)**
Inventor: **Yin, Xiaonan**
**1611 S. Erie**
**Wichita, Kansas 67211 (US)**
Inventor: **Klausmeyer, Kevin K.**
**5607 119th Street West**
**Clearwater, Kansas 67026 (US)**

(74) Representative: **Perry, Robert Edward et al**
**GILL JENNINGS & EVERY 53-64 Chancery**
**Lane**
**London WC2A 1HN (GB)**

(54) Method of controlling phase separation in polymerisation reactions and products utilising same.

(57) A method of controlling phase separation in photoinitiated polymerisation reactions comprises homogenising a block copolymer and a light polymerisable monomer prior to exposure of the monomer to the light source which initiates the polymerisation reaction. The photosensitive reaction initiating agent may be a substituent group of the monomer, a cross-linker or a photoinitiator. The method is particular applicable to preparing sealants, coatings and moulded objects where there is a need for a high depth of cure.

EP 0 454 359 A1

This invention relates generally to photoinitiated polymerization reactions and, more particularly, to a method of controlling phase separation in such a reaction and to sealants and coatings made according to the method.

Present joint sealant technology involves several diverse compositions. Two component caulking mixtures based mainly on polysulfide chemistry are known. A polysulfide oligomer is mixed with an oxidizer immediately before the material is extruded into a joint. Disadvantages of this composition include relatively expensive equipment which is required to apply it and relatively high skill on the part of those workers who perform the application process.

Solvent based sealants are also known. Sealants of this type rely upon evaporation of the solvent to "cure" the sealant which generally requires a relatively long period of time before the material can be subjected to use if foot travel or vehicles normally pass over it.

Moisture curable room temperature vulcanizing (RTV) silicone sealants are also known but when applied to depths in the range of one centimeter or greater require relatively long curing times.

Still another known system is hot applied petroleum based materials but these require a significant warming period in relatively expensive equipment before they can be applied.

The application temperatures are so high that a safety danger is presented to workers. Also, the adhesion properties of such sealants to paving materials such as concrete are not as high as is desired, although such materials are widely used because of their low cost.

It is also known in the art to employ coatings which are photoreactive to effect their cure. Coatings sensitive to ultraviolet light (UV) are most popular and have been successfully used to depths of two or three millimeters, although they are generally employed in much thinner coats. UV activated coatings have not heretofore been applied where a relatively thick coating is necessary because it has been thought that the cure time would be too long. UV cured coatings are also generally hard and relatively brittle which would be factors against their use in applications where expansion and contraction of the substrate is encountered, as is the case with most joint and crack applications.

The present invention addresses the deficiencies of prior art photoreactive polymer systems by providing a composition and method of preparing same which utilizes the combination of a monomer and a block copolymer, the former being used to swell the latter, and thereby control phase separation.

The monomer may itself be photosensitive to effect polymerization or a photosensitive initiator or crosslinker (or both) may be employed to effect polymerization of the monomer. An extender is typically employed to reduce the cost of the sealant and improve its properties. The monomer, crosslinker, extender and the resulting polymer must all be characterized by the inability to absorb light in substantial competition with the photosensitive component or components.

The method of the invention is applicable to any photoinitiated polymerization reaction where phase separation is a potential problem. Phase separation is controlled by homogenizing a block copolymer in the light polymerizable monomer before the polymerization reaction is initiated. The invention is particularly applicable to polymer systems where a high depth of cure is desired. Such systems are useful for coatings, sealants, sound attenuation and molded articles.

It is therefore a primary object of the present invention to provide a photoreactive coating and method of preparing same which does not require heating before use and, therefore, overcomes the deficiencies of hot applied petroleum based coatings.

Another one of the objects of this invention is to provide a photocurable coating which can be applied at virtually any ambient temperature and, accordingly, can be used on roadways and in building construction at any time of the year.

It is also an important aim of our invention to provide a photoreactive coating and method of preparing same which has high bonding properties to materials commonly encountered in the building trades as well as those used in surfacing roads.

It is a particularly important object of our invention to provide a photoreactive coating which can cure rapidly even when applied to depths of several centimeters thus making it particularly desirable as an expansion joint sealant for buildings, and for use on bridges and roadways.

As a corollary to the foregoing objects and aims, it is an important objective of this invention to provide a photoreactive coating which meets the aims and objectives heretofore set forth and which has good physical properties, such as elasticity, resiliency and resistance to UV degradation, a long life when installed, and a long shelf life prior to use.

A further objective of this invention is to provide a method of controlling phase separation in a photoinitiated polymerization reaction.

As a corollary to the above objective, an aim of our invention is to provide a method of controlling phase separation without adversely affecting the properties of the end product.

2

As still another corollary to the foregoing objective, an important aim of this invention is to control phase separation in photoinitiated polymerization reactions so as to allow extremely high cure depths to be accomplished.

Other objects of the invention will be made clear or become apparent from the following description and claims.

In one form, the invention encompasses a photocurable sealant which comprises a monomer, a block copolymer, and a photosensitive initiating agent. The monomer, the polymer formed from the monomer, and the block copolymer and any other components are all characterized by the inability to absorb light in substantial competition with the polymerizing agent. The initiating agent may be a photosensitive substituent of the monomer itself, a photosensitive crosslinker, a photosensitive initiator or a combination of the foregoing.

The monomer which is employed for the sealant composition is preferably hydrophobic and should be translucent to transparent both before and after polymerization. The monomer should be polymerizable to form a polymer which remains pliable to low temperatures and which has a low glass transition temperature ($T_g$). The monomers suitable for use in the composition of the invention will generally be characterized by ultraviolet (UV) light absorption at approximately 250 nanometers (nM).

Table 1 sets forth a number of examples of suitable monomers for use in carrying out the method and composition of the present invention.

## Table 1

```
n-hexyl methacrylate
isooctyl acrylate
isodecyl acrylate
lauryl methacrylate
isodecyl methacrylate
octyl/decyl acrylate
hexyl acrylate
isobornyl acrylate
isobornyl methacrylate
lauryl acrylate
octyl acrylate
stearyl acrylate
analogs of vinyl acetate where a
        C15 or lower alkyl
        is substituted for the
        acetate methyl group
```

The foregoing may be used individually or in combinations. The preferred monomer is isooctyl acrylate which is present in a ratio of at least 1.5:1, monomer:block copolymer (volume:weight, e.g. ml:g); preferably about at least 2:1.

The block copolymer constituent of the sealant formulation is either a diblock thermoplastic copolymer of the formula AB or a triblock thermoplastic copolymer of the formula ABA or a combination of the two. It should be understood that reference to the block copolymer AB throughout this specification and the attendant claims is intended to encompass both AB and ABA polymers unless otherwise indicated. The monomer must be capable of either solublizing or at least being homogeneously mixed with one of the aforementioned block copolymers. Segment B of the AB polymer comprises a short chain ($C_6$ or lower) elastomeric monomer while the A segment(s) comprises styrene or a monomer with similar properties. The proportion of rubber in the B segments should be high (at least 70% by weight) relative to the portion in the A segment. Preferably the block copolymer will comprise approximately 14% by weight styrene (A segment) and 86% by weight ethylene/butylene (B segment) elastomer, with approximately 35 weight percent being the AB diblock and 65 percent being the ABA triblock. The preferred block copolymer has a molecular weight of approximately 180,000. Most block copolymers which are useful in the invention will have molecular weight ranges from about 40,000 to about 1,000,000. Although, the exact mechanism by which the formulation of the present invention operates to provide a superior sealant is not fully understood, it is believed that the block copolymer acts in a synergistic fashion with the polymerized monomer and other components to present an interpenetrating polymer network which precludes phase separation or "oiling out" once the formulation is fully cured.

The monomer/block copolymer reactant which results from swelling of the block copolymer by the monomer for 8-12 hours presents an easily workable solution or alternatively the block copolymer should be able to accept the monomer as a homogeneous mixture utilizing mechanical mixing equipment. Thus, the term "homogenizing" and "homogeneous mixture" as used in this application is intended to encompass "solublizing" and "solutions" as well as homogeneous mixing unless otherwise noted.

The initiating agent which is utilized in the composition should be light sensitive and capable of bringing about the polymerization of the monomer or the crosslinker if one is utilized or both. The initiating agent may comprise a substituent of the monomer itself but more typically a photoreactive crosslinker is employed or a crosslinker which is activated by a photoinitiator (or both). The preferred initiating agent is a photoreactive initiator used in conjunction with a photoreactive crosslinker. The amount of initiating agent should generally be sufficient to polymerize all of the monomers present. This will generally comprise from .01% to 30% by volume of the monomer/block copolymer reactant.

For nonpolar systems a nonpolar monomer and block copolymer should be utilized along with a nonpolar initiating agent. A general criteria for the crosslinker is that it should be miscible with the monomer/block copolymer reactant and remain in solution. Set forth in Table 2 is a list of di and higher functional photosensitive crosslinkers which may be utilized in the formulation of the present invention.

## Table 2

$C_{14}$ and $C_{15}$ alkyl diacrylate
$C_{14}$ and $C_{15}$ alkyl dimethacrylate
1,4 butanediol diacrylate
1,4 butanediol dimethacrylate
1,6 hexanediol diacrylate
1,6 hexanediol dimethacrylate
1,3 butylene glycol diacrylate
1,3 butylene glycol dimethacrylate
diethylene glycol diacrylate
diethylene glycol dimethacrylate
ethylene glycol dimethacrylate
neopentyl glycol dimethacrylate
polyethylene glycol diacrylate
polyethylene glycol dimethacrylate
triethylene glycol diacrylate
triethylene glycol dimethacrylate
tripropylene glycol diacrylate
tetraethylene glycol diacrylate
tetraethylene glycol dimethacrylate
dipentaerythritol pentaacrylate
pentaerythritol tetraacrylate
pentaerythritol triacrylate
trimethylolpropane trimethacrylate
trimethylolpropane triacrylate

The foregoing may be used individually or mixtures of two or more crosslinkers may be employed. A preferred crosslinker is a blend of $C_{14}$ and $C_{15}$ alkyl diacrylate.

To speed the polymerization reaction, it is preferable to also utilize a photoinitiator which generates free radicals upon exposure to light so as to activate the crosslinker and facilitate polymerization of the monomer. Preferably the photoinitiator will decompose upon exposure to UV light to produce radicals which are weaker chromophores than the parent molecule and allow the light to penetrate more deeply into the composition. The quantity of photoinitiator will vary from 0 - 5 weight percent of the final product. The photoinitiator should possess a high degree of reactivity in air and should have a UV absorptivity which will allow it to compete favorably with other UV absorbers within the system for the activating light. Suitable photoinitiators include 2-methyl-1-[4-(methylthio)phenyl]-2-(4-morpholinyl)-1-propanone; 2,2-dimethoxy-2-phenylacetophenone, and a 50:50 (by weight) mixture of 1-hydroxy cyclohexyl phenylketone and benzophenone.

It is also preferable to include in the sealant composition an oligomeric extender having a molecular weight of between 200 to 40,000 and which is miscible with the monomer. The molecular weight of the extender should be less than the molecular weight of the block copolymer. The quantity of extender utilized can vary over a range from 0 to 10 parts by weight relative to the combined weight of monomer and block copolymer. A preferred range is three to five parts by weight. Extenders which are useful in the formulation of the present invention include oligomeiic polyisobutylene and uncrosslinked ethylene-propylene diene monomer (EPDM) rubber. A preferred extender is oligomeric polyisobutylene having a molecular weight of approximately 2,500.

It is, of course, important that the extender, like the monomer and block copolymer, be characterized by the inability to absorb light in substantial competition with the initiating agent, i.e. photoinitiator, photoreactive crosslinker, or photoreactive substituent of the monomer. In this regard, the term "in substantial competition with" is meant to cover compounds which would absorb radiation, normally light in the ultraviolet spectrum, at a wave length which overlaps the absorptivity of the initiating agent to such an extent as to significantly hamper the polymerization reaction.

Other known polymer additives may be included in the formulation to improve certain desired physical properties. As a general rule, these additives will constitute no more than about 1% by weight of the total formulation. For example, a tackiness reducer may be employed. An inert filler such as silica sand may be utilized, although such will reduce the maximum possible depth of cure. If silica is used as a filler, it is desirable that it be treated to produce a hydrophobic surface.

It is also known to utilize light reflective particles in conjunction with photoreactive coatings. These particles, resembling what is commonly referred to as "glitter", can be incorporated into the formulation in small quantities to enhance the photocure by reflecting light rays to greater depths than they would otherwise reach. A preferred light reflective material is aluminum shavings.

The method of preparing the compositions according to the present invention will now be described. As previously indicated, the monomer must be sufficiently compatible with the block copolymer so that either a homogeneous mixture can be prepared utilizing high speed mixing equipment or the monomer is capable of solublizing the block copolymer. Preferably, a monomer is utilized in which the block copolymer is soluble and the homogenizing step comprises swelling (solublizing) the block copolymer with the monomer by simply contacting the two for a period of 8-12 hours at room temperature. The result is a viscous putty-like material to which is added the extender and photoreactive initiating agent (assuming the initiating agent is other than a substituent group of the monomer) which is preferably a photosensitive crosslinker containing a small percentage of photoinitiator. The foregoing are then mixed in a conventional mixer preferably one that is heated by the passage of hot water through an outer jacket. Mixing is continued while a low vacuum is applied to facilitate removal of bubbles which would interfere with the integrity of the cured product.

A formulation prepared according to the foregoing description will present a highly translucent to transparent composition of high viscosity which will cure under direct sunlight over a period of 8-12 hours. The cure time can be reduced to a matter of minutes by utilizing a source of artificial ultraviolet (UV) light such as a lamp with 500 nV/cm output at 350 nm at a distance of 6 cm from the source. Cure depths of approximately 5 cm have been obtained utilizing formulations prepared according to the aforedescribed method.

It will be appreciated that the invention encompasses a method of controlling phase separation in a photoinitiated polymerization reaction which is applicable to polymer systems other than those directed specifically to sealants and coatings.

Particularly where high depth of cures are sought phase separation is a potential problem. The method of the invention in its broadest aspect contemplates controlling phase separation in a photoinitiated polymerization reaction by homogenizing (solublizing or homogeneously mixing) a block copolymer and a light polymerizable monomer prior to exposure of the monomer to the initiating light source. This method preferably utilizes a monomer that is a solvent for the block copolymer with the latter having the formula AB or ABA as previously identified. Preferably, an extender that is miscible in the monomer is also employed as previously indicated. The monomers with which the method of the invention is particularly useful are those set forth previously although other monomers meeting the criteria herein set forth may be employed with the ratio of monomer to block copolymer being at least 1.5:1 on a volume:weight basis.

While the invention has been described with particular reference to UV light sensitive components, and this is the preferred light source because of its ready availability and relative safety, the principles of the invention are applicable to compositions which react to radiation in other than the ultraviolet (UV) spectrum.

The following examples, all of which may be prepared according to the method of the invention, illustrate useful formulations particularly suitable as joint and crack sealants for roadways, bridges and buildings.

## Examples

### EXAMPLE #1           WEIGHT%

| | WEIGHT% |
|---|---|
| styrene-ethylene/butylene-styrene | 11.17 |
| isooctyl acrylate | 19.67 |
| 2-methyl-1-[4-(methylthio)phenyl]- | |
| 2-(4-morpholinyl)-1-propanone | 0.20 |
| polyisobutylene | 58.52 |
| $C_{14}$-$C_{15}$ alkyl diacrylate blend | 10.44 |

### EXAMPLE #2           WEIGHT%

| | WEIGHT% |
|---|---|
| styrene-ethylene/butylene-styrene | 10.27 |
| isooctyl acrylate | 18.08 |
| 2-methyl-1-[4-(methylthio)phenyl]- | |
| 2-(4-morpholinyl)-1-propanone | 0.25 |
| polyisobutylene | 51.35 |
| $C_{14}$-$C_{15}$ alkyl diacrylate blend | 20.05 |

### EXAMPLE #3           WEIGHT%

| | WEIGHT% |
|---|---|
| styrene-ethylene/butylene-styrene | 12.85 |
| isooctyl acrylate | 22.35 |
| 2,2-dimethoxy-2-phenylacetophenone | 0.28 |
| polyisobutylene | 52.96 |
| $C_{14}$-$C_{15}$ alkyl dimethacrylate blend | 11.56 |

### EXAMPLE #4           WEIGHT%

| | WEIGHT% |
|---|---|
| styrene-ethylene/butylene-styrene | 7.55 |
| octyl/decyl acrylate | 20.75 |
| 2,2-dimethoxy-2-phenylacetophenone | 0.50 |
| polyisobutylene | 58.85 |
| $C_{14}$-$C_{15}$ alkyl dimethacrylate blend | 12.35 |

### EXAMPLE #5           WEIGHT%

| | WEIGHT% |
|---|---|
| styrene-ethylene/butylene-styrene | 12.65 |
| octyl/decyl acrylate | 25.44 |
| 1-hydroxycyclohexl phenylketone(50%) | |
| benzophenone(50%) | 0.38 |
| polyisobutylene | 45.79 |
| 1,6 hexanediol dimethacrylate | 15.74 |

| EXAMPLE #6 | WEIGHT% |
|---|---|
| styrene-ethylene/butylene-styrene | 11.55 |
| isooctyl acrylate | 23.95 |
| 2-methyl-1-[4-(methylthio)phenyl]- | |
| 2-(4-morpholinyl)-1-propanone | 0.50 |
| ethylene-propylene diene monomer | 50.90 |
| 1,6 hexanediol diacrylate | 13.10 |

| EXAMPLE #7 | WEIGHT% |
|---|---|
| styrene-ethylene/butylene-styrene | 11.55 |
| octyl/decyl acrylate | 23.95 |
| 2-methyl-1-[4-(methylthio)phenyl]- | |
| 2-(4-morpholinyl)-1-propanone | 0.50 |
| ethylene-propylene diene monomer | 50.90 |
| 1,6 hexanediol diacrylate | 13.10 |

| EXAMPLE #8 | WEIGHT% |
|---|---|
| styrene-ethylene/butylene-styrene | 11.55 |
| isodecyl methacrylate | 24.05 |
| 2,2-dimethoxy-2-phenylacetophenone | 0.45 |
| ethylene-propylene diene monomer | 42.90 |
| 1,4 butanediol diacrylate | 21.05 |

| EXAMPLE #9 | WEIGHT% |
|---|---|
| styrene-isoprene-styrene | 12.55 |
| isooctyl acrylate | 24.85 |
| 2-methyl-1-[4-(methylthio)phenyl]- | |
| 2-(4-morpholinyl)-1-propanone | 0.30 |
| polyisobutylene | 48.75 |
| 1,4 butanediol diacrylate | 13.55 |

| EXAMPLE #10 | WEIGHT% |
|---|---|
| styrene-ethylene/butylene-styrene | 10.90 |
| octyl acrylate | 21.25 |
| 2-methyl-1-[4-(methylthio)phenyl]- | |
| 2-(4-morpholinyl)-1-propanone | 0.25 |
| polyisobutylene oligomer | 41.10 |
| polyisobutylene polymer | 10.35 |
| $C_{14}$-$C_{15}$ alkyl dimethacrylate blend | 16.15 |

| EXAMPLE #11 | WEIGHT% |
|---|---|
| styrene-ethylene/butylene-styrene | 11.17 |
| isooctyl acrylate | 19.67 |
| 2-methyl-1-[4-(methylthio)phenyl]- | |
| 2-(4-morpholinyl)-1-propanone | 0.25 |
| polyibutylene | 58.47 |
| $C_{14}$-$C_{15}$ alkyl diacrylate blend | 10.44 |

EXAMPLE #12 ............................................... WEIGHT%

| | |
|---|---|
| styrene-ethylene/butylene-styrene | 11.50 |
| isodecyl acrylate | 23.65 |
| 2,2-dimethoxy-2-phenylacetophenone | 0.33 |
| polyisobutylene | 50.87 |
| 1,4 butanediol dimethacrylate | 13.65 |

## Claims

1. A photocurable composition comprising a monomer that can be polymerised to form a light-penetrable polymer; a block copolymer that swells on contact with the monomer and/or is sufficiently compatible with the monomer to form a homogeneous mixture; and a photosensitive or photoreactive agent capable of initiating polymerisation of the monomer; wherein the monomer, the polymer formed therefrom, and the block copolymer are unable to absorb light in substantial competition with the agent.

2. A composition as claimed in claim 1, wherein the initiating agent comprises a photoreactive cross-linker or a cross-linker and a free-radical-generating or other photoinitiator for the cross-linker.

3. A composition as claimed in claim 2, wherein the photoinitiator comprises 2-methyl-1-[4-(methylthio)phenyl]-2-(4-morpholinyl)-1-propanone and/or 2,2-dimethoxy-2-phenylacetophenone.

4. A composition as claimed in claim 1, wherein the agent comprises a photoreactive substituent of the monomer.

5. A composition as claimed in any preceding claim, wherein the monomer is present in a quantity in excess of the quantity of the block copolymer, on a weight:volume basis, preferably a ratio of at least 1.5:1, e.g. about 2:1.

6. A composition as claimed in any preceding claim, wherein the block copolymer is of styrene and ethylene/butylene.

7. A composition as claimed in any preceding claim, wherein the monomer has only non-polar pendant groups.

8. A composition as claimed in any preceding claim, wherein the monomer is an alkyl acrylate, an alkyl methacrylate or a vinyl $C_{2-18}$ alkanoate, e.g. isooctyl acrylate.

9. A composition as claimed in any preceding claim, wherein the monomer has a higher light-absorptivity than its polymer.

10. A composition as claimed in any preceding claim, which additionally comprises an extender that is miscible with the monomer and unable to absorb light in substantial competition with the agent, e.g. polyisobutylene or non-cross-linked EPDM rubber.

11. A composition as claimed in claim 10, which comprises 3 to 5 parts by weight of the extender relative to the combined weight of the monomer and the block copolymer.

12. A photoinitiated polymerisation reaction comprising exposing a light-polymerisable monomer to a light source, characterised by the prior step of homogenising the monomer and a block copolymer, e.g. swelling the block copolymer with the monomer.

13. A method as claimed in claim 12, wherein the monomer and the block copolymer are comprised in a composition as claimed in any of claims 1 to 11.

8

European Patent
Office

**EUROPEAN SEARCH REPORT**

Application Number

EP 91 30 3481

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 154 512 (UNIROYAL INC.) <br> * Example; claims * <br> --- | 1-6,9-13 | C 08 F 287/00 <br> C 08 F 2/48 |
| X | EP-A-0 075 236 (BASF AG) <br> * Examples; claim 1 * <br> --- | 1 | |
| X | DE-A-3 727 537 (NIPPON ZEON CO., LTD) <br> * Examples; claims * <br> --- | 1-6,9-13 | |
| X | EP-A-0 238 863 (W.R. GRACE AND CO.) <br> * Whole document * <br> ----- | 1-13 | |
| | | | TECHNICAL FIELDS SEARCHED (Int. Cl.5) |
| | | | C 08 F |

The present search report has been drawn up for all claims

| Place of search | Date of completion of the search | Examiner |
|---|---|---|
| THE HAGUE | 04-07-1991 | GLIKMAN J-F.M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)